# EUROPEAN PATENT APPLICATION

(11) **EP 4 738 030 A1**
(43) Date of publication of application: **06.05.2026**
(21) Application number: 25207234.3
(22) Date of filing: 07.10.2025
(51) Int. Cl.: G05B 19/042, G05B 23/02

(54) **IDENTIFYING MACHINE SUBSTATES**

(30) Priority: 01.11.2024 US 202463715029 P; 25.09.2025 US 202519340131
(71) Applicant: Deere & Company, Moline, IL 61265 (US)
(72) Inventor: Deo, Mayur, Mannheim (DE); Enderle, John, Mannheim (DE); Pedersen, Ryan, Mannheim (DE); Lusty, William, Mannheim (DE); Asonye, Iroh, Mannheim (DE); Hemphill, Tristan, Mannheim (DE); Marquis, Timothy, Mannheim (DE)
(74) Representative: Holst, Sönke

(57) **Abstract**

State data transmitted from a machine is received by a server (502), where the state data include telemetry data from one or more sensors on the machine, and the telemetry data are collected at a specified frequency. The state data is processed by the server to obtain transformed data (504). The transformed data is input into a machine-learning model (508), where the machine-learning model is configured to output an operational substate of the machine based on the transformed data. A substate prediction of the machine is generated (510) using the machine-learning model, where the substate prediction includes a probability value for each possible substate. The substate prediction is then output to a user interface for display (512).

## Description

This disclosure relates to machine operations and more specifically to identifying substates of machines using machine learning.

### SUMMARY

Disclosed herein are implementations of predicting machine substates.

One aspect of the disclosed implementations relates to a method for predicting a substate of a machine. The method includes receiving, by a server, state data transmitted from the machine, wherein the state data include telemetry data from one or more sensors on the machine, and the telemetry data are collected at a specified frequency; processing, by the server, the state data to obtain transformed data; inputting the transformed data into a machine-learning model, wherein the machine-learning model is configured to output an operational substate of the machine based on the transformed data; generating, using the machine-learning model, a substate prediction of the machine, wherein the substate prediction includes a probability value for each possible substate; and outputting the substate prediction to a user interface for display.

One aspect of the disclosed implementations relates to a system, including: a memory subsystem and processing circuitry. The processing circuitry is configured to execute instructions stored in the memory subsystem to receive state data transmitted from a machine, wherein the state data include telemetry data from one or more sensors on the machine, and the telemetry data are collected at a specified frequency; process the state data to obtain transformed data; input the transformed data into a machine-learning model, wherein the machine-learning model is configured to output an operational substate of the machine based on the transformed data; generate, using the machine-learning model, a substate prediction of the machine, wherein the substate prediction includes a probability value for each possible substate; and output the substate prediction to a user interface for display.

One aspect of the disclosed implementations relates to one or more non-transitory computer-readable storage media including instructions that, when executed by one or more processors, perform operations for predicting a substate of a machine. The operations include receiving, by a server, state data transmitted from the machine, wherein the state data include telemetry data from one or more sensors on the machine, and the telemetry data are collected at a specified frequency; processing, by the server, the state data to obtain transformed data; inputting the transformed data into a machine-learning model, wherein the machine-learning model is configured to output an operational substate of the machine based on the transformed data; generating, using the machine-learning model, a substate prediction of the machine, wherein the substate prediction includes a probability value for each possible substate; and outputting the substate prediction to a user interface for display.

These and other aspects of the present disclosure are disclosed in the following detailed description of the embodiments, the appended claims and the accompanying figures.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a block diagram of a system for determining machine substates.
FIG. 2 is a block diagram of a computing device.
FIGS. 3A-3B illustrate an example of a technique for training an ML model to identify machine substate.
FIG. 4 is a block diagram of example functionality of a substate prediction software.
FIG. 5 is an example of a technique for determining a substate of a machine.
FIG. 6 illustrates a table that presents examples of machine types, their associated states, and corresponding substates.
FIG. 7A illustrates an example of a user interface that serves as an operations center for monitoring and managing agricultural machinery within a field.
FIG. 7B illustrates a user interface that provides an example of how machine substates may be displayed on a user interface of a machine.
FIG. 8 is a flowchart of an example of a technique for predicting machine substate.

### DETAILED DESCRIPTION

Determining or identifying the state of a farming machine, while crucial, is often not sufficient to fully optimize operations (e.g., farming operations). For example, modern farming involves highly dynamic activities where machines, such as sprayers and harvesters, transition through various operational stages. Simply knowing the current state-whether a machine is idle, moving, or performing a specific function-provides a limited snapshot that lacks the necessary context for timely and effective decision-making. Conventional telemetry systems typically may provide state information that is either too generic or fails to indicate what corrective actions might be needed, leading to missed opportunities for improving operational efficiency.

For instance, a sprayer in an "idle" state may be at rest for numerous reasons, such as requiring a chemical refill, waiting for maintenance, or simply being parked for a planned pause. Without the capability to identify specific substates-like "idle waiting for refill" or "idle due to maintenance requirements"-conventional systems cannot offer actionable guidance. The distinction between these substates can significantly alter the management response. An "idle waiting for refill" state indicates that a support vehicle should be dispatched, while an "idle due to maintenance" state might require a completely different intervention. Additional "idle" substates may include "full grain tank waiting for unloading" and "idle due to blockage." Similarly, a harvester in a "harvesting" state may be associated with the specific substate "actively harvesting." At least some substates may require respective distinct operational responses to restore or maintain productivity.

Each substate classification is unique to its corresponding state, ensuring that a given substate designation cannot occur across multiple different states. This constraint maintains clear operational distinctions and prevents ambiguity in substate interpretation and subsequent operational responses.

Conventional systems, which often use static thresholds or basic sensor readings to determine states, lack the sophistication needed to differentiate these subtleties (e.g., the substates). They may generate alerts for prolonged idleness but do not provide insights into why a machine is idle or what should be done next. Consequently, farm managers are left with reactive, rather than proactive, management approaches, resulting in inefficiencies like extended machine downtime or suboptimal use of support resources. Thus, understanding machine substates-such as "actively spraying" versus "waiting for a refill"-is essential for enabling a more precise, context-aware response that can minimize downtime and enhance operational efficiency.

Implementations according to this disclosure solve problems such as these by leveraging machine-learning (ML) models trained on historical data to identify machine substates dynamically and in real-time (e.g., near real-time). Accordingly, this approach allows a trained ML model to not only identify that a machine is, for example, idle, but also predict the likely reason for the idleness-such as the need for refilling or waiting for unloading-thereby enabling timely actions to restore productivity, if necessary.

By providing machine operators (such as farm or construction site managers) with specific, actionable information, implementations according to this disclosure enable accurate visibility into what each machine (or a fleet of machines) may be doing (e.g., what is its substate) at any given point in time, thereby minimizing unnecessary idle times, optimizing resource allocation (e.g., by dispatching support vehicles when needed), and enhancing overall farm efficiency. This visibility drives understanding of when machines need support (e.g., during idle time) or intervention (e.g., unexpected transport), allowing for efficient corrective actions.

Additionally, implementations according to this disclosure support improving evaluation and planning efforts, which can drive changes in management or purchase decisions. The use of a predictive, context-aware ML models ensures that decisions can be made proactively, improving both machine utilization and productivity, while also enabling analysis of efficiency across different machines, thus providing valuable insights for optimizing operations.

While the disclosure herein is described mainly with respect to farming machines, the disclosure is not so limited and may be applicable to other domains involving complex machinery and operational states, such as construction equipment, earth-moving vehicles, and industrial manufacturing systems. Operators (e.g., construction site operators) in these domains similarly benefit from understanding specific operational machine substates to improve efficiency, optimize resource usage, and minimize downtime.

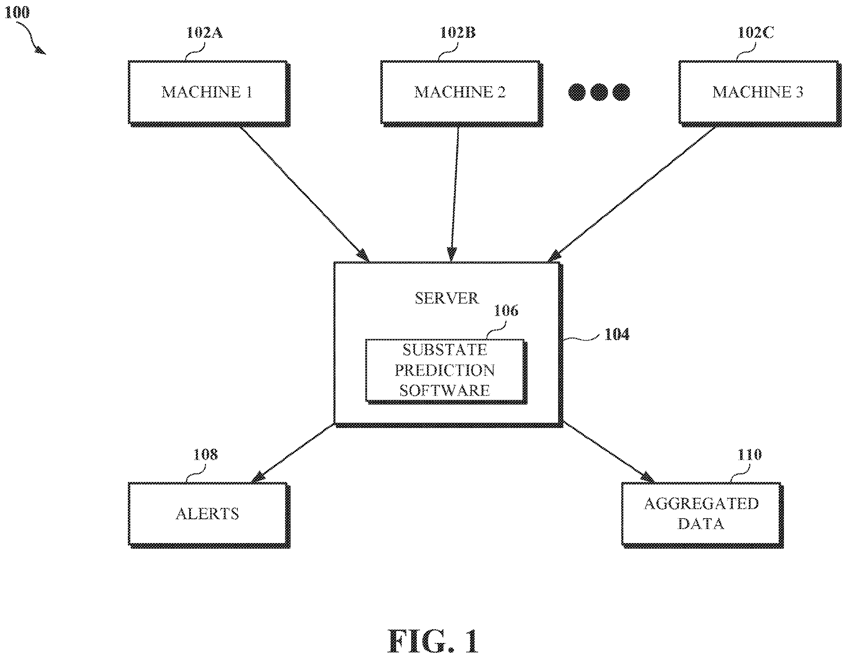

To describe some implementations in greater detail, reference is first made to examples of systems, machines, implements, hardware and software structures used to implement a system for identifying machine substates using ML. FIG. 1 is a block diagram of a system 100 for determining machine substates. The system 100 includes a number of machines (e.g., machines 102A through 102C) and a server 104 that includes a substate prediction software 106. Each of the machines transmits state data to the server 104. The state data can be telemetry data that is collected during machine operation. The machines may be various types of agricultural or construction equipment, each providing specific types of data for analysis.

To illustrate, the machine 102A may be a combine harvester, and the state data can include information such as the fill level of the grain tank, engine revolutions per minute (RPM), speed, and the status of the harvesting mechanism (e.g., whether the header is actively cutting crops or idle); the machine 102B may be a sprayer, and the transmitted state data can include the current spray rate, tank fill level, boom height, and vehicle speed; and the machine 102C may be an earth-moving vehicle, such as a bulldozer or an excavator, and the state data can include the hydraulic pressure readings, arm positioning, engine status, and operational mode (e.g., digging or moving).

The server 104 receives the state data from each machine and processes it using the substate prediction software 106. The substate prediction software 106 may include one or more ML models that are configured to analyze the telemetry data to determine (i.e., predict) the specific substate of each machine. These ML models are trained on historical data to learn the different operational patterns and behaviors of various machine types, enabling the ML models to classify and predict machine substates.

For example, an ML model may use the received state data from a sprayer to determine whether the sprayer is actively applying chemicals, waiting for a refill, or idle for maintenance. Similarly, for a combine, an ML model may determine if the machine is in a harvesting state, is full and waiting for unloading, or is idle due to an obstruction, such as by another machine in the field. The ML models leverage the state data, which may include both real-time sensor inputs and historical context, to classify each machine into a defined substate. This classification allows operators to receive detailed insights into the operation of their equipment, such as whether a specific action, like refilling or maintenance, is required.

The substate prediction software 106 may be configured with different ML model architectures depending on the operational context and the types of machines involved. The substate prediction software 106 may employ machine-specific ML models, where different trained models can be optimized for particular machine types and operational scenarios. For example, a model configured to predict substates for a harvester requiring unloading may utilize different hyperparameters and feature sets compared to a model designed for a sprayer requiring tank refilling. While these models may share similar architectures (e.g., random forest architectures), each ML model may be trained and optimized specifically for the operational characteristics and sensor data patterns associated with its target machine type (such as a sprayer, a combine, or an excavator) using data relevant to that machine's operation. This machine-specific approach enables more accurate substate predictions by accounting for the unique operational behaviors and telemetry patterns of different agricultural equipment types. In some implementations, certain machine-learning models can be designed to incorporate data from multiple machines, especially when these machines operate in tandem as part of a coordinated task.

For instance, when a combine, a tractor, and a grain cart work in tandem, the operations of these machines may inherently be interdependent. The combine harvester collects the crop, while the tractor pulls the grain cart to receive the harvest from the combine. The tractor, which pulls the grain cart, may be autonomously driven to optimally position the grain cart for receiving the crop from the combine's auger, based on the combine's path and movement dynamics. In this scenario, the ML model associated with predicting the substate of the combine may also receive state data from the tractor and/or grain cart, allowing the ML model to better predict the substate of the combine based on additional factors (e.g., state or context) associated with the tractor and/or grain cart. Similarly, an ML model associated with predicting the substate of the tractor pulling the grain cart may utilize data from the combine, such as the fill level of the combine's grain tank, to determine its own substate and guide its actions. Such integrated ML models can enhance the predictive capability by using data from related machines, resulting in a more cohesive and efficient operation of all machines working in tandem.

The system 100 also includes components for providing feedback to an operator or other relevant personnel. Specifically, the substate prediction software 106, after analyzing the state data, may generate actionable alerts 108. The actionable alerts 108 may indicate the need for operator intervention, such as dispatching a support vehicle for refilling or performing maintenance on a machine. Additionally, the server 104 may store or derive aggregated data 110, which can be used for retrospective analysis to improve operational efficiency, analyze machine utilization, or optimize fleet management strategies.

Accordingly, the disclosed implementations involve substate prediction using a suite of ML models and algorithms that utilize live machine telemetry data to produce context-specific determination of machine substates. The disclosed ML models operate offboard (e.g., not on the machines themselves), utilizing a live data stream to output predictions to remote (e.g., cloud-based) web and mobile applications. Furthermore, the disclosed implementations can provide a live view into the current operation of machines, generate alerts when unexpected behaviors occur, identify geospatial areas of operational interest, and quantify the benefits of automation technologies being used.

While not specifically shown in FIG. 1, the state data received from a machine may be collected using a variety of sensors installed on each piece of equipment, which can include but are not limited to Global Positioning System (GPS) units, load sensors, pressure sensors, flow meters, and engine telemetry sensors. For instance, a sprayer may use flow meters to determine the rate of chemical application, while GPS units track its precise location in the field. Load sensors on a combine's grain tank may measure how full the grain tank is, and pressure sensors on a tractor's hydraulics system may indicate the current mechanical load. The collected data from these sensors is then transmitted to the server 104 using wireless communication technologies, such as cellular networks, satellite communication, dedicated short-range communication (DSRC), or some other suitable communications medium or technology. In addition to sensor-based data, some state data may be collected from non-sensor sources. For example, operational schedules or user inputs regarding planned activities-such as indicating when a field is expected to be fully harvested-may also be transmitted to the server to supplement sensor data. This integration of sensor-derived and manually input data provides a more comprehensive understanding of machine states and their operational contexts.

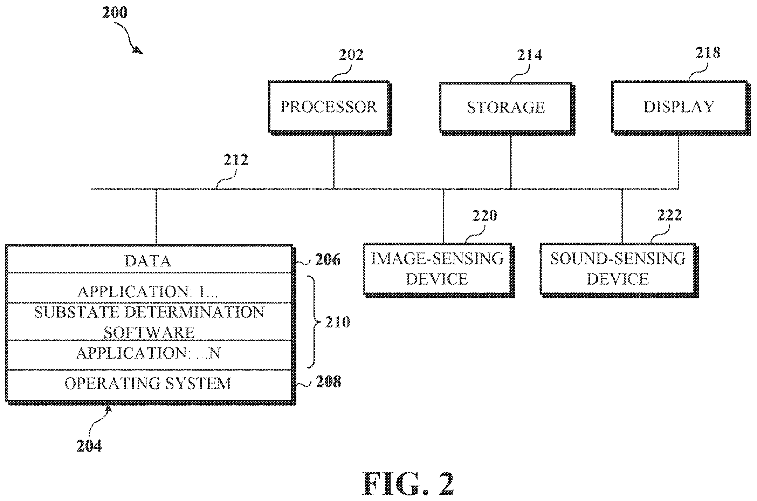

FIG. 2 is a block diagram of a computing device 200. The computing device 200 can implement a server, such as server 104 of FIG. 1, or be part of a machine, such as one of the machines 102A through 102C of FIG. 1, to collect, process, and transmit state data (e.g., sensor data) to server 104 of FIG. 1, and/or perform operations or display information related to substate prediction. The computing device 200 can be implemented as a computing system comprising one or more devices, such as an embedded system or server, suitable for industrial or agricultural environments.

A processor 202 in the computing device 200 can be a conventional central processing unit. Alternatively, the processor 202 can be another type of device, or multiple devices, capable of manipulating or processing information now existing or hereafter developed. For example, although the disclosed implementations can be practiced with one processor as shown (e.g., the processor 202), advantages in speed and efficiency can be achieved by using more than one processor.

A memory 204 in the computing device 200 can include different types of memory, such as random access memory (RAM) for temporary data storage during processing, and read-only memory (ROM) for storing firmware or other static information. Additionally, the memory 204 can store code and data 206 accessed by the processor 202 via a bus 212. The memory 204 also includes an operating system 208 and application programs 210, including at least one program enabling the processor 202 to perform the substate prediction techniques described herein. For example, when the computing device 200 implements the server 104 of FIG. 1, the application programs 210 may include applications 1 through N, which further include substate prediction software that executes the relevant techniques.

The computing device 200 can also include secondary storage 214 for non-volatile storage, which may be used to store larger datasets or historical telemetry information. This secondary storage may comprise memory cards, solid-state drives (SSDs), or other forms of persistent storage suitable for storing data that needs to be accessed as required by the processor 202.

The computing device 200 can include output devices such as a display 218. The display 218 can be a touch-sensitive display that allows user interaction and can be implemented using conventional technologies, such as LCD or OLED. Other output devices, such as indicator lights or audible alarms, may also be used to communicate status or alerts.

The computing device 200 can include or communicate with an image-sensing device 220, such as a camera, capable of capturing images relevant to machine operations. For example, an image-sensing device mounted on a machine may capture images of the field, crops, or operational components, which can be analyzed for features that serve as inputs to an ML model for substate prediction. The computing device 200 can also include or be in communication with a sound-sensing device 222, such as a microphone. The sound-sensing device can capture operational sounds, such as engine noise or alarm signals, which may be analyzed to determine machine conditions, identify faults, or trigger maintenance actions.

Although FIG. 2 depicts the processor 202 and the memory 204 of the computing device 200 as being integrated into one unit, other configurations can be utilized. The operations of the processor 202 can be distributed across multiple devices (wherein individual device can have one or more processors) that can be coupled directly or across a local area or other network. The memory 204 can be distributed across multiple devices such as a network-based memory or memory in multiple devices performing the operations of the computing device 200. Although depicted here as one bus, the bus 212 of the computing device 200 can be composed of multiple buses. Further, the secondary storage 214 can be directly coupled to the other components of the computing device 200 or can be accessed via a network and can comprise an integrated unit such as a memory card or multiple units such as multiple memory cards. The computing device 200 can thus be implemented in a wide variety of configurations.

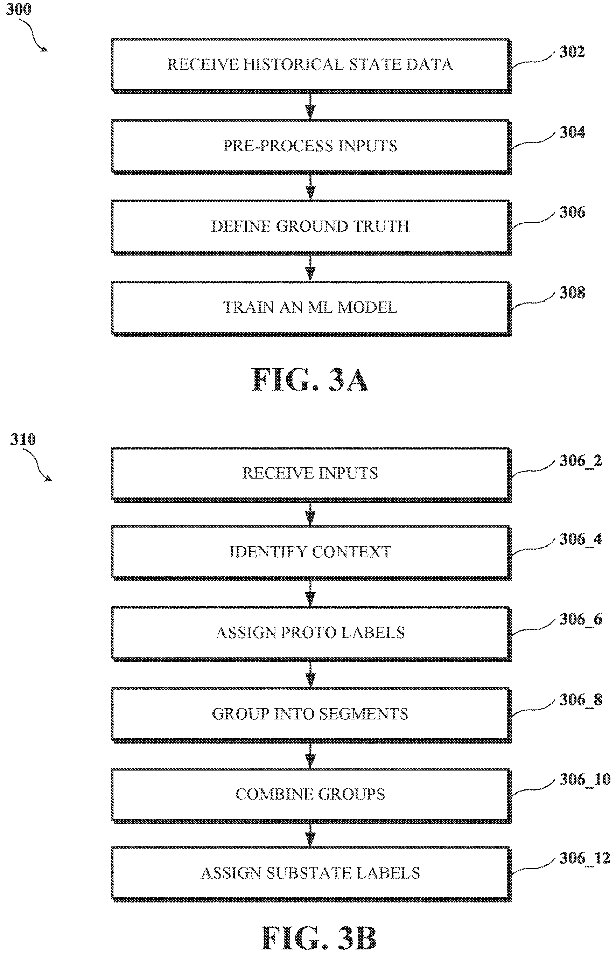

FIGS. 3A-3B illustrate an example of a technique 300 for training an ML model to identify machine substate. The technique 300 can be executed using a computing device, such as the computing device 200 of FIG. 2. The technique 300 can be performed, for example, by executing a machine-readable program or other computer-executable instructions, such as routines, instructions, programs, or other code. The steps, or operations, of the technique 300, or another technique, method, process, or algorithm described in connection with the implementations disclosed herein can be implemented directly in hardware, firmware, software executed by hardware, circuitry, or a combination thereof.

At 302, historical state data are received. The historical state data are collected from one or more machines corresponding to the ML model being trained. These historical state data may include telemetry data collected from the one or more machines during prior operations, environmental data, and operator inputs. The state (e.g., telemetry) data may be collected at a specified frequency, such as 1 Hz, 5 Hz, or some other frequency. This means that data points are captured every, for example, one second or every 0.2 seconds. The high-frequency data collection can ensure a detailed representation of machine activities over time, which is useful for accurately identifying the operational state and substates of the machine during subsequent training processes. This historical state data serves as the foundational input for determining the operational state and substates of at least one of the one or more machines during the subsequent training processes, providing a rich source of information for the ML model to learn the relationships between telemetry readings and machine behavior.

The telemetry data may be gathered using various sensors, such as GPS units, flow meters, pressure sensors, engine metrics, and other types of machine activity-related data. The telemetry data can further include operation-specific measures such as wheel speed, GPS speed, sprayer system operating mode, tank volume, tank capacity, product application state, grain tank fill level percentage, harvest wet mass flow, unloading auger state, and/or other operation-specific measures.

For example, wheel speed and GPS speed may provide information on both mechanical and geospatial movement of a machine, while tank volume and product application state may be critical for assessing the operation of sprayers. Additional telemetry data may include a grain tank fill level percentage and harvest wet mass flow for combines, which give detailed insights into harvesting productivity. The unloading auger state indicates whether a combine is currently unloading its grain, which is important for understanding machine transitions between operational substates.

Environmental data such as weather conditions (e.g., temperature, humidity) may also be incorporated into the historical state data, providing context for machine performance under varying conditions. Operator inputs may include manual entries that indicate planned operations, such as start and stop times for specific tasks.

Table I illustrates examples of the historical state data that may be used training the ML model. While not specifically shown in Table I, a timestamp may be associated with each data point.

| **TABLE I - Examples of Historical State Data** | | |
|---|---|---|
| **Input Type** | **Data Source** | **Example** |
| Machine Speed | Wheel Sensors, GPS Unit | Wheel Speed: 15 km/h; GPS Speed: 16 km/h |
| Sensor Measurements | Tank Sensor, Flow Meter | Fill Level of Spray Tank: 45% |
| Machine Settings | Operator Entry | Sprayer set to "Active" at 10:00 AM |
| Operation-Specific Measures | Telemetry Data | Sprayer System Operating Mode: "Rinse"; Tank Volume: 1500 L; Grain Tank Fill Level: 80% |
| Environmental Data | Weather Data Service | Temperature: 25°C, Humidity: 60% |
| Product Application State | Sprayer Controller | Product Application: "On"; Harvest Wet Mass Flow: 1200 kg/hr |
| Unloading Auger State | Auger Position Sensor | Auger State: "Unloading" |

At 304, the historical data are pre-processed to prepare them for training. Pre-processing the historical data may include one or more of data cleaning tasks, feature extraction tasks, normalization tasks, filtering, mean/standard deviation re-scaling tasks, and encoding of categorical inputs tasks.

Data cleaning may be performed to remove corrupted, incomplete, irrelevant, or outlier data points, ensuring the integrity and quality of the dataset. Feature extraction may then be conducted to derive meaningful attributes from raw data, such as calculating the average speed of a machine over a given interval. To ensure that numerical inputs are comparable, normalization may be applied, specifically through mean/standard deviation re-scaling, which centers numerical values around the mean and scales them based on the standard deviation. This helps prevent any features with larger value ranges from unduly influencing the model.

To illustrate, consider a series of speed measurements collected from a tractor: 10, 20, 15, 25, and 30 km/h. To perform mean/standard deviation re-scaling, also known as z-score normalization, the mean and standard deviation of the dataset are calculated. The mean is determined by summing the values and dividing by the total number of measurements, resulting in a mean of 20 km/h. Next, the variance is calculated by finding the squared differences between each value and the mean, which are then averaged. In this case, the variance is 50, and the standard deviation is the square root of the variance, approximately 7.07.

Using this information, each value is re-scaled by subtracting the mean and dividing by the standard deviation. For the original data, 10 km/h is re-scaled to approximately -1.41, 20 km/h becomes 0, 15 km/h becomes approximately -0.71, 25 km/h becomes approximately 0.71, and 30 km/h becomes approximately 1.41. After re-scaling, the new data has a mean of 0 and a standard deviation of 1. The mean and standard deviation may be calculated from the entire training dataset for each specific metric (e.g., speed) and stored for future use. In some implementations, outliers may be excluded. These stored values are subsequently used to re-scale new data points consistently, whether during model training or deployment. This process ensures that the numerical inputs are on a standardized scale, preventing any feature with a larger original value range from having a disproportionate impact during machine-learning model training. Consistently using the same mean and standard deviation values, even if the actual data distribution changes over time, maintains coherence and accuracy in model predictions.

Additionally, categorical inputs, such as machine settings or operational states, are encoded into numerical values suitable for the ML model. For example, a categorical input like "Sprayer Operating Mode," which may assume one of the values "Spray" or "Rinse," is converted into a numerical representation to be processed by the ML model. Filtering can also be used to eliminate irrelevant data points that do not contribute meaningfully to the ML model training, such as data recorded during machine idle times.

At 306, ground truth labels (e.g., substates) are associated with the data used to train the ML model. The ground truth labels are defined as described with respect to FIG. 3B. This step involves creating accurate and context-specific labels that describe the substates of the machine based on the historical data received and pre-processed in previous step

At 308, the ML model is trained using the labeled data generated as described with respect to FIG. 3B. The training process can be conducted using supervised learning algorithms. Briefly, supervised learning is a type of machine learning where an algorithm is trained on labeled data. In this approach, the model learns by being provided with input-output pairs, where the input is the feature data (e.g., telemetry data from a machine), and the output is the known label (e.g., machine substate). The goal of supervised learning is to enable the model to generalize the mapping from inputs to outputs so that it can predict labels accurately for new, unseen data. Common supervised learning tasks include classification (e.g., predicting which substate a machine is in) and regression (e.g., predicting a numerical value like fuel consumption).

The ML model or deep learning model (DL) may be trained using techniques such as random forests, neural networks, or gradient boosting, depending on the complexity of the relationships between telemetry data and machine substates. In an example, random forests is used. Briefly, random forests is an ensemble learning algorithm that combines multiple decision trees to produce more accurate and stable predictions/determinations. Each decision tree in the forest can be trained on a random subset of the data, and during prediction, the final output is determined by aggregating the results from all individual trees (e.g., by majority vote in classification tasks). Random forests are effective for both classification and regression tasks and are known for their ability to handle large datasets with high-dimensional features. Random forests are known to be less prone to overfitting compared to individual decision trees.

The ML model is trained to match the ground truth as closely as possible. However, during real-time execution, the model may not have access to all the same inputs that were available during the creation of the ground truth. Certain contextual information, such as some past and all future conditions, may be partially or entirely unavailable when the model is applied in the real-time. Consequently, the model can be trained to use a slightly different set of inputs, allowing it to make accurate predictions under the constraints of real-time data availability, while maintaining a strong correlation with the original ground truth labels.

The ML model training process described above may be implemented using specific data preprocessing techniques, feature engineering approaches, and model optimization methods to facilitate effective substate prediction capabilities. Such implementation approaches provide detailed methods for developing suitable machine-learning models that can operate in near real-time operational environments.

The ML models may process telemetry data collected at regular intervals, such as on a second-by-second basis, and may address missing data through various imputation techniques beyond those described in the preprocessing steps. For categorical data columns, such as indicator variables showing whether machine components like Power Take Off systems are active, null values may be treated as separate categories rather than requiring imputation. Alternative imputation approaches specific to operational deployment may be employed, such as filling missing values in a primary speed measurement column based on available data from a secondary speed measurement source.

Alternative imputation techniques may be employed based on the availability of related sensor data. For instance, when a primary speed measurement is missing, the missing value may be imputed using data from a secondary speed measurement source, such as deriving speed from GPS position changes when wheel-based speed sensors are unavailable. This approach can leverage redundant sensor systems commonly found on agricultural machinery to maintain data completeness and prediction accuracy.

Additional numerical features may be generated through combination and transformation of input data columns. Such feature engineering may include compressing data ranges to better represent operational characteristics. For example, engine RPM values may be adjusted to reflect that operational values above certain thresholds (e.g., above approximately 800 RPM) represent the effective operational range, and values may be re-scaled to treat such thresholds as reference points. Feature engineering may also include calculating ratios between different input measurements and creating composite features that combine numerical and categorical data. For instance, engine output measurements may be mathematically adjusted based on the status of categorical features such as Power Take Off engagement, since such operational states may impact engine performance characteristics.

During the training process, multiple candidate features may initially be generated, though many such features may subsequently be removed to optimize computational performance. This feature selection process may be implemented through semi-automated techniques that balance model accuracy with computational resource requirements, including processing time and memory usage considerations. Such optimization may facilitate deployment in operational environments where computational resources and response time may be important factors.

The generated features may be normalized using the statistical scaling techniques described above. The normalized input features may then be provided to various machine-learning algorithms during the training process, with different algorithms being evaluated using different parameter configurations.

Multiple algorithm types may be evaluated to determine suitable approaches for specific applications. Such algorithms may include linear methods such as logistic regression, non-linear methods such as random forests, and ensemble methods such as boosting algorithms like AdaBoost. Performance evaluation may consider both prediction accuracy and computational complexity to facilitate deployment of models that provide effective results without excessive computational resource requirements.

Hyperparameter optimization may be performed for each algorithm type being evaluated. For linear methods, regularization parameters may be adjusted to optimize model performance. For tree-based methods, parameters such as tree depth and branching criteria may be varied to determine suitable configurations. For ensemble methods, the number of component estimators may be adjusted to balance accuracy and computational requirements.

As noted above, random forest algorithms may provide effective performance for many substate prediction applications. The hyperparameters may be optimized based on the specific machine type and operational context. Key hyperparameters include the number of trees in the random forest, which may range from approximately 10 to 100 trees, the depth of individual trees, and minimum sample requirements for node splitting. Suitable configurations may include tree depths on the order of moderate values (e.g., approximately 20 levels), ensemble sizes with a limited number of trees (e.g., approximately 10 trees), and branching criteria that require a minimum number of training examples (e.g., approximately 10 examples) to create additional splits in the decision trees. The hyperparameters may be selected so as to balance prediction accuracy with computational efficiency, as increasing the number of trees (e.g., from 100 to 5,000) may provide only marginal accuracy improvements while significantly increasing computational time by a factor of 50 or more. Such configurations may provide effective substate classification while maintaining reasonable computational requirements for operational deployment.

The trained ML models may be configured to generate substate predictions at regular intervals, such as approximately every few seconds (e.g., every five seconds), to provide timely operational insights.

FIG. 3B is an example of a technique 310 of associating ground truth labels. At 306_2, the pre-processed historical data (i.e., input data) are received. At 306_4, contexts are identified for association with the input data. This step involves assessing and associating with the input data surrounding conditions, including the machine's location, the type of operation being conducted, and the relevant actions, readings, and settings of the machine over a time frame both before and after the moment of interest. By incorporating this temporal information, the context provides a richer understanding of the machine's operational behavior, allowing the model to better distinguish between different substates based on a more holistic view of preceding and succeeding activities.

At 306_6, proto labels are assigned to the input data to provide preliminary classifications for subsequent processing. Each data point, such as every second of data collected, is labeled with a proto label. These proto labels are derived based on key features extracted from telemetry data, such as sensor readings, operational settings, and contextual information from previous and following time frames. The proto labels represent an initial categorization of machine actions or states, such as "potential refill," "active harvesting," or "idle." Unlike definitive labels, proto labels serve as preliminary markers that are subject to further refinement and verification.

The proto labels can be assigned by agronomic experts based on their knowledge of farming operations and understanding of expected machine behavior under specific conditions, as well as their interpretation of key features from historical data trends. Agronomic experts utilize their practical experience and insights into typical machine workflows, environmental conditions, and operational sequences to ensure that the proto labels reflect realistic farming activities, thereby improving the accuracy of subsequent predictive modeling. The proto labels may also be set based on automatic rules derived from predefined thresholds. At least some of automatic rules may also be configured based on agronomic expertise. For instance, if the tank level of a sprayer drops below a certain threshold and the machine speed is reduced, it may receive a proto label indicating "potential refill." Similarly, repeated sequences of zero velocity data may be tagged with a proto label of "idle."

At 306_8, similar data points are grouped into cohesive segments, which represent consistent machine activities over time. Consecutive data points that are classified into the same preliminary substate are grouped together. This involves looking at the data, which is categorized on a, for example, second-by-second basis, and then combining any consecutive seconds that fall into the same preliminary category into a single "event." This helps reduce the number of individual points by treating a series of similar actions as one unit. By combining these similar consecutive actions into unified events, the grouping process allows for a simplified and more efficient representation of the data, enabling easier identification of broader machine behavior patterns.

To illustrate, consider a scenario in which a machine's spray tank level data is considered and each second of data is assigned a proto label indicating whether it is "Spraying" or "Idle":

| | | |
|---|---|---|
| Second 1: Spraying | Second 5: Idle | Second 9: Spraying |
| Second 2: Spraying | Second 6: Idle | Second 10: Spraying |
| Second 3: Spraying | Second 7: Spraying | |
| Second 4: Spraying | Second 8: Spraying | |

In the grouping step, the periods of consecutive seconds with the same label ("Spraying" or "Idle") would be combined into larger events. As such, the following groups result: Group 1: "Spraying" from seconds 1 to 4; Group 2: "Idle" from seconds 5 to 6; and Group 3: "Spraying" from seconds 7 to 10.

At 306_10, related groups that exhibit temporal or contextual continuity are combined to form larger, more meaningful events, helping reduce fragmentation in the dataset. To illustrate, and continuing from the example above, it may be determined that the two seconds of Idle time constitute a small intermediate gap and, consequently, the groups are combined into one group: Group 1: "Spraying" from seconds 1 to 10.

At 306_12, definitive substate labels are assigned to the grouped and combined data points. The substate labels may also be set based on agronomic expertise. This step involves using the original proto labels that served as the foundation for forming these groups, with further refinement made by considering additional context from adjacent groups. In most cases, the final substate labels follow directly from the original proto labels, effectively solidifying the machine behavior indicated during each segment.

There may be instances where the context provided by neighboring groups-such as preceding or following machine actions-adds valuable insight for accurately defining a substate. For example, observing that a sprayer has been idle and is positioned near a refill station, while adjacent groups indicate low tank levels, helps to assign a label like "Idle Waiting for Refill." This nuanced label assignment allows for a more precise definition of specific machine behaviors that the ML model will learn to recognize, such as "Idle Waiting for Refill" or "Actively Spraying."

The ground truth labeling process described above may be implemented using specific sensor-based criteria and temporal analysis techniques to facilitate appropriate substate classification. Such implementation approaches provide techniques for creating suitable training data for the machine-learning models. Described below are examples of sensor-based event classification, event merging and temporal continuity, contextual substate refinement, transport classification and geographic context, and turn detection and working operations.

For each historical session, the session may be divided into time-based segments representing distinct operational events. The classification of these events may rely on analyzing telemetry data patterns and sensor readings to determine the underlying machine activity. For example, in sprayer operations, periods where the machine is configured for spraying and sensors detect fluid flow through application nozzles may be classified as "Spraying" events. This approach may use direct measurement of product application rather than relying on machine settings alone. For instance, the machine settings may indicate that the sprayer is configured for active spraying, but the nozzle flow sensors provide confirmation that product is actually being dispensed.

Similarly, periods where the machine remains stationary while tank fill level sensors indicate increasing volume may be classified as "Refilling" events. When neither spraying nor refilling conditions are detected but GPS data indicates machine movement, these periods may be classified as "Transporting" events. Periods where the machine is stationary without active spraying or refilling operations may be classified as various forms of idle states.

Following initial event classification, consecutive events of the same type may be merged to create more coherent operational segments. This merging process may remove brief interruptions between similar activities by eliminating short time intervals, such as periods of a few seconds or less (e.g., two seconds or less), that occur between events of the same classification. For instance, an extended spraying operation interrupted by a brief transport reading may be consolidated into a single spraying event to better represent the actual operational intent. Such temporal analysis may mitigate sensor noise and brief operational variations that may not represent meaningful changes in machine substate. The duration of time intervals selected for this merging process may be determined based on the typical operational characteristics of the specific machine type and the nature of the agricultural task being performed.

The ground truth labeling process may further refine idle classifications by analyzing temporal context and preceding activities. Idle events that precede specific operational requirements, such as refilling or unloading activities, with no intervening work events may be reclassified as "Waiting" states. The contextual analysis for refining idle classifications may account for temporal sequences that include intervening transport events. For example, when determining whether an idle period should be classified as "Waiting to Refill," future refilling events may be identified while allowing for an indefinite number of intermediate transport events between the idle period and the refilling event. This approach recognizes realistic operational scenarios where a machine may be idle in the middle of a field due to an empty tank, then transport to the field edge to meet a refill vehicle, with the entire sequence appropriately classified as waiting for refill rather than treating the transport as a separate, unrelated event.

Transport events may be further classified into subcategories based on geographic and operational context. Road transport may be distinguished from in-field transport by analyzing machine location relative to field boundaries and road network data. This geographic analysis may help differentiate between operational movements within the field and transportation between different operational areas.

Working turns, which may include row turns or headland turns, may be identified through directional analysis over specified time periods. Directional changes may be identified over time intervals, such as periods of approximately one minute (e.g., sixty seconds), that approach substantial directional reversals, such as changes near 180 degrees. For example, directional changes between approximately 160 and 200 degrees may be considered as potential turn events. When such directional reversals are detected, the temporal boundaries of the turning action may be analyzed to determine when the turn begins and ends. Working operations may then be verified to occur on both sides of the identified turn event. If working activities are not present on both sides of the turn, the directional change may be classified as road-based maneuvering rather than a working turn. This validation may facilitate appropriate classification of operationally relevant turns as working turn events.

Such detailed ground truth creation techniques may enable the generation of suitable training datasets that capture the nuanced operational behaviors of agricultural machinery, supporting the development of machine-learning models capable of distinguishing between subtle but operationally significant machine substates.

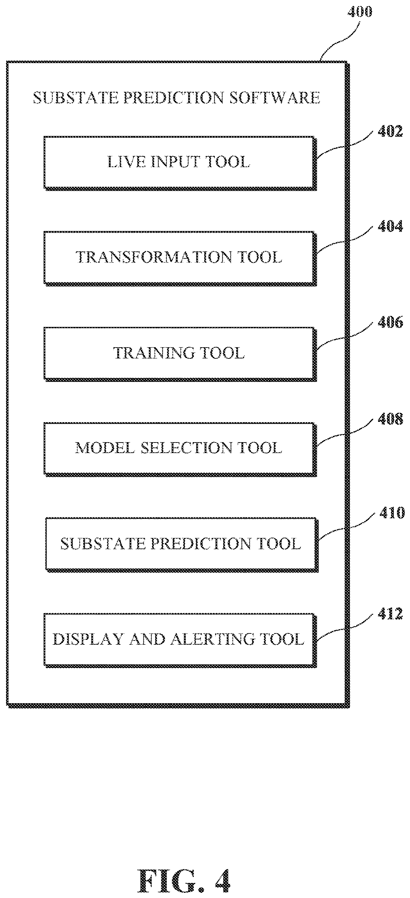

FIG. 4 is a block diagram of example functionality of a substate prediction software 400, which may be, for example, the substate prediction software 106 of FIG. 1. The substate prediction software 400 includes tools, such as programs, subprograms, functions, routines, subroutines, operations, executable instructions, and/or the like for, *inter alia* and as further described below, predicting machine substates. At least some of the tools of the substate prediction software 400 can be implemented as respective software programs that may be executed by one or more computing devices, such as the computing device 200 of FIG. 2. A software program can include machine-readable instructions that may be stored in a memory such as the memory 204, and that, when executed by a processor, such as processor 202, may cause the computing device to perform the instructions of the software program.

As shown, the substate prediction software 400 includes a live input tool 402, a transformation tool 404, a training tool 406, a model selection tool 408, a substate prediction tool 410, and a display and alerting tool 412. In some implementations, substate prediction software 400 can include more or fewer tools. In some implementations, some of the tools may be combined, some of the tools may be split into more tools, or a combination thereof.

The live input tool 402 collects (e.g., receives) live machine state data, which include data from onboard sensors installed on machines. The state data includes telemetry from multiple sources, such as GPS units, flow meters, pressure sensors, engine metrics, tank levels, and other parameters that capture a machine's operational state in real time. The data may be collected at high frequencies, such as 1 Hz or 5 Hz, to ensure a detailed and up-to-date picture of machine activity. In addition to state data, the live input tool 402 may also consider (e.g., receive as input) a machine schedule of the machine. The machine schedule provides insight into planned activities for the machinery, such as designated times for spraying, refilling, or transporting materials. For example, if a machine is scheduled to spray at a specific time but is detected as idle during that window, the discrepancy may be flagged for review. The schedule data is usable by the substate prediction software 400 in determining whether the machine is performing as expected or if an unexpected deviation has occurred, which may warrant further action.

The transformation tool 404 processes the collected state data by performing a series of transformations to prepare the data for analysis, as described herein. These transformations include creating multi-component features that combine several telemetry inputs into composite metrics, scaling features to ensure uniformity in data magnitude, and imputing missing values based on the context of other machine operations. For instance, if field boundary data is available, the transformation tool may use this information to determine if the machine is operating close to an edge or a tendering location, thus providing more context to the substate prediction.

The training tool 406 is responsible for training ML models using processed historical data, as described herein. The training tool 406 may employ various supervised learning algorithms, such as a random forest, to learn the relationships between input telemetry and the operational substates of a machine. During training, the ground truth labels-generated as described in FIGS. 3A and 3B-are used to map telemetry inputs to specific machine behaviors. This enables a trained ML model to identify subtle patterns in machine activity that are associated with distinct operational substates, such as "Idle Waiting for Refill" or "Actively Spraying."

The model selection tool 408 determines which trained model to apply based on a specific machine (e.g., the machine for which a substate prediction is sought) and context. For example, different models may be trained for distinct machine types, such as combines, sprayers, tractors, or specific models thereof, and the model selection tool uses the current machine's type to select the appropriate model. In cases where multiple machines are working in tandem, such as a tractor pulling a grain cart closely following a combine, the tool may also take into account the data from these collaborating machines to improve prediction accuracy.

The substate prediction tool 410 uses the selected model to predict the current substate of the machine based on the transformed live input data and, optionally, the machine schedule. The substate prediction tool 410 may output both predicted substates and corresponding substate probabilities-the likelihoods that the machine is in each possible substate. For instance, if the model determines that a sprayer is most likely in the "Spraying" state with an 85% probability, but also assigns a 10% probability to "Idle," this information is provided to the user to convey the model's confidence in its prediction. This probabilistic output is especially useful for operators to understand the model's certainty and to make informed decisions when there is ambiguity in machine behavior. In an example, the substate prediction tool 410 may just output the substate with the largest probability.

The display and alerting tool 412 can present information on various devices, such as in-cabin monitors, mobile devices, and computers, giving users visibility into the current operational state of each machine. Additionally, an alerting functionality of the display and alerting tool 412 may transmit notifications (e.g., alerts) regarding specific substates and unexpected behaviors. These alerts include, for example, notifications about an idle machine during a scheduled active period, or when an anomaly such as overheating or an unexpected drop in speed is detected. Alerts can be sent to different stakeholders, such as operators, technicians, or fleet managers, depending on the nature of the alert. For example, if a machine's predicted substate indicates that it requires maintenance, an alert can be sent to a technician to initiate repair processes, reducing downtime and ensuring the machine's operational continuity.

This alerting mechanism may also support advanced use cases such as logistics and scheduling optimization. For instance, when a machine is detected to be idle due to a lack of resources (e.g., waiting for a refill), alerts can prompt support vehicles to be re-routed to ensure the machine can resume operations as soon as possible. In some situations, the support vehicles may autonomously be routed to the machine. Moreover, productivity analysis functionality of the display and alerting tool 412 may enable users to assess the performance of individual machines or a fleet of machines. Insights gained through substate prediction may also be used to support purchase decisions, enabling customers to make informed choices based on machine productivity. Another use case is identifying field zones where specific activities, like tendering or unloading, frequently occur, thus providing valuable information for optimizing field operations.

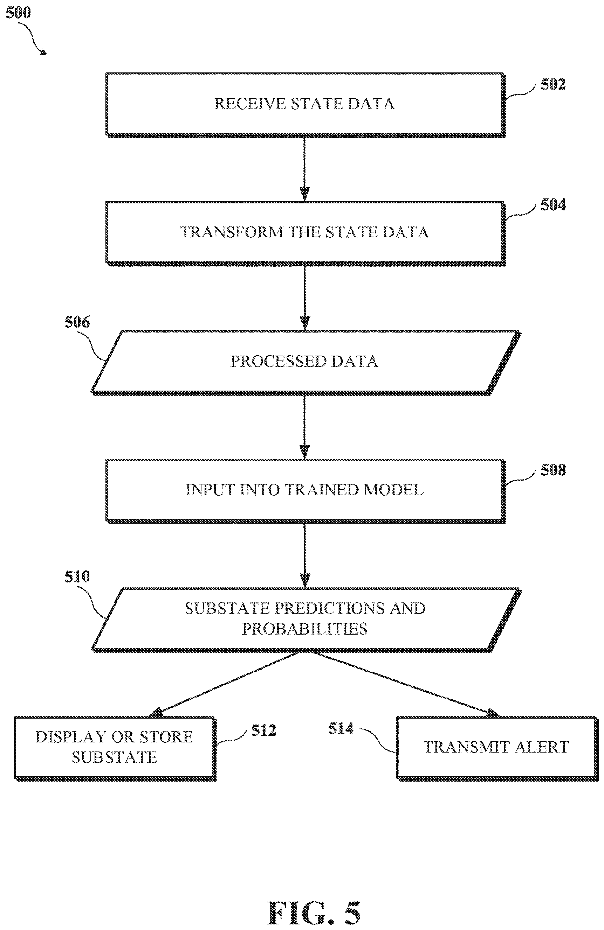

FIG. 5 is an example of a technique 500 for determining a substate of a machine. The technique 500 can be executed using a computing device, such as the computing device 200 of FIG. 2. The technique 300 can be performed, for example, by executing a machine-readable program or other computer-executable instructions, such as routines, instructions, programs, or other code. The steps, or operations, of the technique 500, or another technique, method, process, or algorithm described in connection with the implementations disclosed herein can be implemented directly in hardware, firmware, software executed by hardware, circuitry, or a combination thereof.

The technique 500 may be generally designed to analyze state data on a second-by-second basis to facilitate real-time substate determination. However, in practice, certain values (e.g., input types) inherently require data spanning multiple timestamps. For example, speed may be calculated by assessing the difference in positions across two distinct times and dividing by the time interval, which inherently covers more than one timestamp. In other scenarios, small amounts of data may be required to provide sufficient context, such as determining whether a machine is turning. While the goal is to minimize reliance on extensive historical data to reduce system complexity and avoid bandwidth strain, the technique 500 also accounts for instances where multiple seconds of past data are beneficial for accurate state determination with respect to certain inputs. Consequently, the technique 500 may use different numbers of past seconds depending on the specific input being analyzed, in order to balance real-time responsiveness with the need for contextual accuracy.

At 502, state data is received from one or more machines. The state data includes various inputs collected by onboard sensors installed on the one or more machines, which monitor parameters such as speed, fill levels, GPS coordinates, and engine metrics. The data is collected at a high frequency, such as 1 Hz or 5 Hz, to capture detailed and timely information about the machine's operations. The data may be received by the live input tool 402 of the substate prediction software 400 of FIG. 4. The live input module can be configured for collecting the real-time telemetry data that provides a continuous stream of inputs from different sensors.

At 504, the state data is transformed to obtain processed data 506. The state data may be processed by the transformation tool 404 of the substate prediction software 400 of FIG. 4. The transformation tool receives the raw state data and applies several transformations, including scaling features, creating multi-component features, and imputing missing values, to ensure that the dataset is comprehensive and standardized. For example, the transformation tool might use field boundary data to determine the relative position of the one or more machines and impute missing data values based on prior knowledge of the machine's expected behavior. The transformed data allows for an enriched dataset where derived features are created to improve the accuracy of predictions by providing a deeper context to the model. The state data is transformed as described above with respect to step 304 of FIG. 3A. Additionally, the state data may be transformed (e.g., grouped) as described with respect to 306_4 through 306_10 of FIG. 3B.

At 508, the processed data 506 is input into a trained ML model. Several machine-specific trained ML models may be available, and the trained ML model selected to receive the processed data 506 can depend on the one or more machines from which the input data is received. That is, the processed data 506 is input into the ML model that has been trained to predict the substate of one of the one or more machines. As described above, during the training phase, a random forest algorithm may be used to learn associations between telemetry inputs and corresponding machine substates. The trained ML model uses the processed data to predict the current substate of the machine by leveraging live input data.

The ML model outputs substate predictions and probabilities 510. The output includes the predicted substate of the machine, such as "Idle Due To Maintenance," "Idle Waiting For Instructions," "Idle Waiting to Tender," "Actively Spraying," "In Field Transport," or "Turning" along with the probabilities associated with each predicted substate. A substate prediction module determines which substate the machine is most likely in based on the telemetry inputs, while the substate probabilities module provides a measure of confidence for each prediction. For example, it might predict that the machine is "Spraying" with a probability of 85%, while "Idle" has a 10% likelihood. These probabilities provide insight into the confidence level of the model's prediction, helping operators understand the reliability of the inferred substate. The substate associated with the highest probability may be considered to be the current substate of the machine.

At 512, the determined substate is stored and/or displayed by one or more display or storage units. The display units can be implemented on various devices, such as in-cabin monitors, mobile devices, or computer systems, to present real-time information to operators. This information helps operators make informed decisions about machine operation, such as determining when to refill a tank or assessing whether a machine is functioning optimally. The display units serve as the interface between the prediction system and the user, allowing for visual feedback and actionable insights based on the substate predictions.

While operators of the machine itself may already be aware of the reasons for certain substates (e.g., idling), this information can be crucial for other parties, such as tender drivers and managers, who need actionable insights for effective coordination. For example, if the substate indicates that a sprayer is idle because it is out of product and awaiting a refill, this information can be communicated directly to a tender driver, prompting them to take action to refill the sprayer promptly. Similarly, managers can use this substate information to coordinate logistics, ensuring that machines are supported efficiently and minimizing downtime. Additionally, substate information can be valuable for post-operation analysis. For instance, understanding when a machine is turning allows the aggregation of such data for evaluating the performance of turning automation versus human operators or comparing different human operators. This type of analysis supports ongoing performance evaluation and provides data-driven insights to optimize machine usage, evaluate automation technologies, and identify opportunities for improving overall operational efficiency.

At 514, the technique 500 may transmit alerts regarding the determined substate. The alerts can be generated based on the substate predictions and the associated probabilities, as well as when unexpected conditions are identified. For example, if the predicted substate indicates a low tank level with high confidence, an alert may be transmitted to an operator indicating that the machine needs refilling soon. Alerts may also be triggered by a variety of other conditions, such as machine overheating, deviation from expected operational behavior, or detecting an idle state during a period when activity is expected. Unexpected conditions may be identified such as by comparing the predicted state to an expected operational state or pattern, such as based on a schedule of the machine. For instance, if a machine is supposed to be spraying but is detected to be idle based on the absence of flow sensor data or other telemetry readings, an alert can be generated indicating an operational anomaly.

The alerts can take various forms depending on the nature of the condition. Some alerts may be advisory, such as a recommendation for routine maintenance, while others may be more urgent, such as a warning of potential component failure. Alerts may be transmitted to various devices, such as mobile phones, in-cabin monitors, or web-based applications (e.g., dashboards), ensuring that operators are informed in real time. Alerts can also be customized based on user preferences, the operational conditions, or specific thresholds set by the operator or system administrator. This alerting mechanism allows for proactive actions, helping to reduce downtime, prevent operational issues, and optimize the efficiency of machine operations.

Furthermore, alerts can be visual, auditory, or a combination of both, depending on the display units used. For example, visual alerts on an in-cabin display can highlight specific areas of concern, such as overheating, while auditory alerts can be used to catch the operator's attention immediately during critical conditions. By providing timely and relevant alerts, the system enhances the ability of operators to respond effectively to both expected and unexpected machine behaviors, ensuring smoother and more efficient field operations.

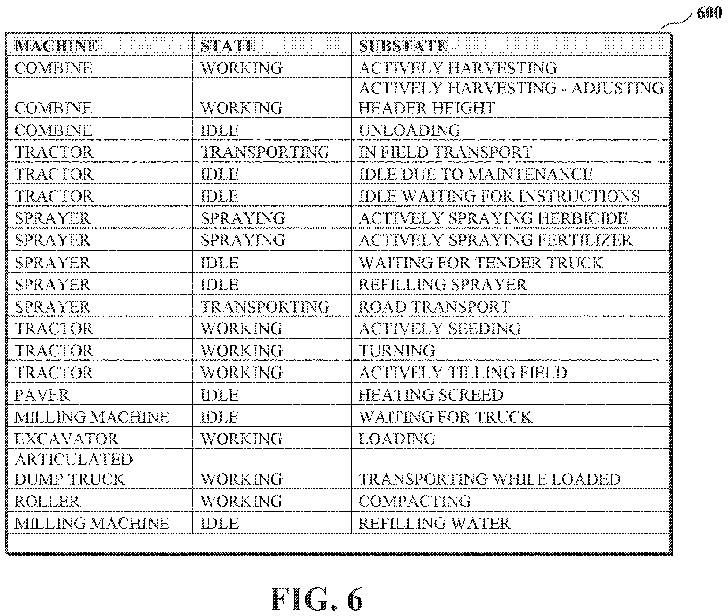

FIG. 6 illustrates a table 600 that presents examples of machine types, their associated states, and corresponding substates. The table 600 is designed to provide a representative overview of how different agricultural machines operate in distinct contexts and how these operations are further broken down into more granular substates. For conciseness, the table 600 includes only a subset of machines for which ML models can be trained, as well as subsets of states and respective substates that the trained models can predict. The table 600 is organized into three columns-Machine Type, State, and Substate-offering at least two examples of states and their corresponding substates for each type of machine.

The table 600 provides an illustration into how ML models can differentiate between various operational substates, such as distinguishing between "Actively Harvesting" and "Actively Harvesting - Adjusting Header Height" for a combine during harvesting operations, or differentiating between "Idle Waiting for Instructions" versus "Idle Due to Maintenance" for a tractor. The inclusion of detailed substates, such as "Unloading" while idle or "Transporting Grain To Storage Facility" during transporting, illustrates the nuanced tasks that each machine undertakes, which are critical to optimizing overall operational efficiency. The ability to predict and monitor such detailed substates enables better decision-making, reduces downtime, and ensures that the entire farming operation can be managed more effectively.

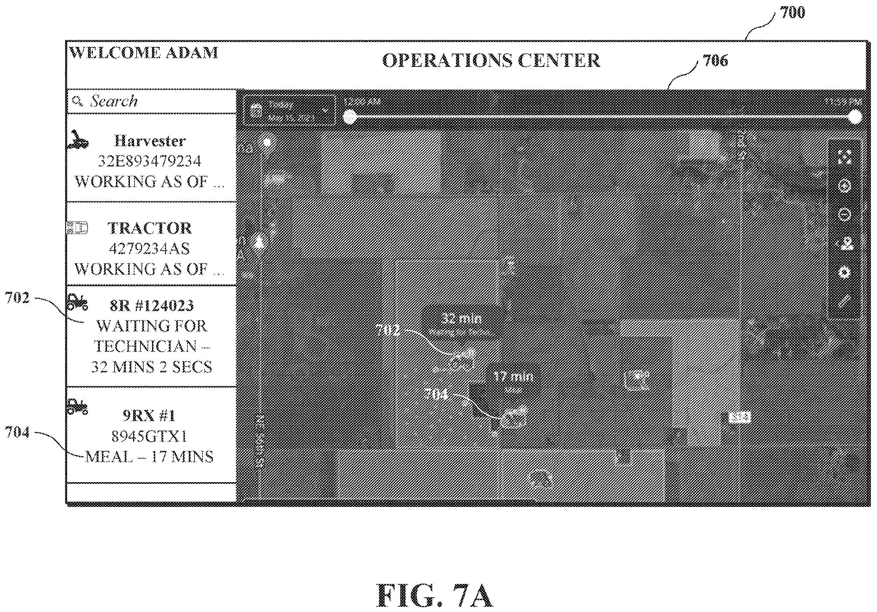

FIG. 7A illustrates an example of a user interface 700 that serves as an operations center for monitoring and managing agricultural machinery within a field. The user interface 700 provides an integrated overview of the current activities, locations, and operational substates of different machines, allowing the user to manage field operations effectively. The interface includes a list of machines currently in operation, displayed on the left-hand side of the user interface 700. Among the machines listed, there is a machine 702 and a machine 704, each associated with unique identifiers and descriptive status updates.

The user interface further includes a map 706 showing a portion of the field where these machines are currently located. The map 706 may display satellite imagery or field data, providing geographical context. Overlaid on the map 706 are visual representations of the machines, including at least the machine 702 and the machine 704. Icons therefor are positioned to reflect the actual locations of the machines in the field.

The user interface 700 also illustrates the substates of the machine 702 and the machine 704, as predicted by a substate prediction software (e.g., by ML models therein), as described herein. The substate of the machine 702 is predicted to be "Waiting for Technician" for a duration of 32 minutes and 2 seconds, suggesting that the machine requires maintenance or some form of technical intervention, which could impact its operational efficiency. Meanwhile, the substate of machine 704 is indicated as being on a "Meal" break for 17 minutes, providing insight into planned downtime for operator rest.

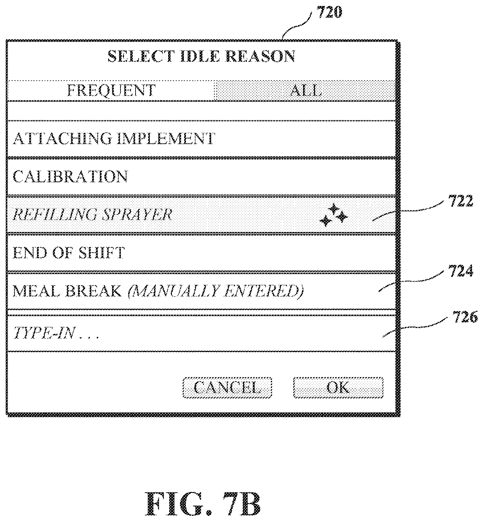

The substate "Meal" break may not be detectable via telemetry or sensor data. Such an idle substate may instead be inferred based on contextual information such as the machine's operational schedule, prolonged inactivity during expected work periods, or manual input from the operator, such as described with respect to FIG. 7B. For example, if the machine's telemetry indicates that it has been stationary for an extended period while engine activity and other operational metrics remain unchanged, and this corresponds to a scheduled break time, the ML model may infer (e.g., predict) that the machine is on a meal break. Alternatively, and as shown in FIG. 7B, the operator may directly input the reason for idleness into the user interface, allowing the system to classify the substate as a "Meal" break.

FIG. 7B illustrates a user interface 720 that provides an example of how machine substates may be displayed on a user interface of a machine. The user interface 720 is designed to assist operators in accurately identifying and confirming the reason behind a machine's idle state. The user interface 720 first displays a message indicating that the state of the machine is idle, prompting the user to either confirm the predicted substate or select or enter (e.g., type) a different one.

The user interface 720 presents a list of possible substates for the idle machine, categorized under labels like "Frequent" and "All" to assist the user in quickly identifying the appropriate substate. In the current example, the predicted substate is shown as a substate 722, which is labeled as "REFILLING SPRAYER." This substate represents the system's determination of why the machine is idle, based on analysis of telemetry data and other contextual inputs. If the substate 722 is incorrect, the operator is given the option to select another substate from the provided list or manually enter an alternative substate.

For example, if the operator recognizes that the machine is idle for a different reason, such as a scheduled break, they may select or enter a substate like a substate 724, which could be labeled as "MEAL BREAK." The label "MEAL BREAK" shown in substate 724 indicates that it was manually entered by some user at a previous time, demonstrating that user-defined entries are retained for future selection. Furthermore, the user interface 720 includes a text entry field 726, labeled as "TYPE-IN...," which allows the operator to directly type in a custom substate that may not be listed among the predefined options.

The user interface also features control buttons, such as "CANCEL" and "OK," allowing the operator to either cancel the update or confirm the selected substate, thereby updating the machine's status within a management system.

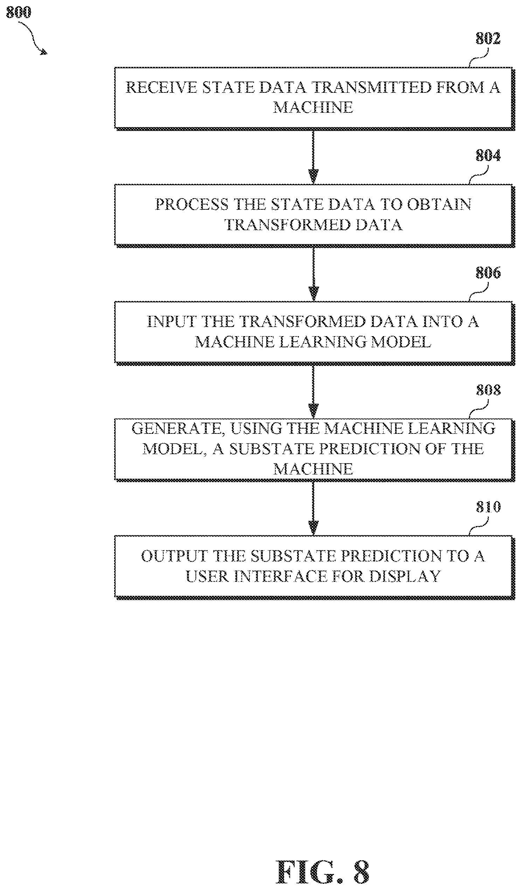

To further describe some implementations in greater detail, reference is next made to examples of techniques which may be performed for predicting machine substate. FIG. 8 is a flowchart of an example of a technique 800 for predicting machine substate. The technique 800 can be executed using computing devices, such as the systems, hardware, and software described with respect to FIGS. 1-7B. The technique 800 can be performed, for example, by executing a machine-readable program or other computer-executable instructions, such as routines, instructions, programs, or other code. The steps, or operations, of the technique 800 or another technique, method, process, or algorithm described in connection with the implementations disclosed herein can be implemented directly in hardware, firmware, software executed by hardware, circuitry, or a combination thereof.

For simplicity of explanation, the technique 800 is depicted and described herein as a series of steps or operations. However, the steps or operations in accordance with this disclosure can occur in various orders and/or concurrently. Additionally, other steps or operations not presented and described herein may be used. Furthermore, not all illustrated steps or operations may be required to implement a technique in accordance with the disclosed subject matter.

FIG. 8 is an example of a technique 800 for predicting a substate of a machine. As mentioned above, the machine can be an agricultural machine, a construction machine, an earth-moving machine, or the like. The technique 800 can be executed using computing devices, such as the systems, hardware, and software described with respect to FIGS. 1-7B. The technique 800 can be performed, for example, by executing a machine-readable program or other computer-executable instructions, such as routines, instructions, programs, or other code. The steps, or operations, of the technique 800, or another technique, method, process, or algorithm described in connection with the implementations disclosed herein can be implemented directly in hardware, firmware, software executed by hardware, circuitry, or a combination thereof. The technique 800 can be implemented by a server associated with agricultural operations to dynamically predict machine substates based on real-time telemetry data.

At 802, state data transmitted from the machine is received at a server. The state data can be received by the live input tool 402 of FIG. 4. This state data includes telemetry data collected from one or more sensors installed on the machine, and the telemetry data are collected at a specified frequency, such as 1 Hz or 5 Hz. The telemetry data may include measurements such as speed, engine temperature, tank level, location coordinates, or engine load. In an example, telemetry data can be received from at least one other machine operating in tandem with the machine, which can enhance the context for determining the substate of the target machine. The received state data is then utilized for further processing.

At 804, the state data is processed to obtain transformed data. The state can be processed by the transformation tool 404 of FIG. 4. This processing step can include scaling features, imputing missing values, and creating composite metrics to ensure uniformity in the dataset, which makes it more suitable for analysis. Processing the state data to obtain transformed data can include performing data cleaning to remove corrupted, incomplete, or outlier data points; extracting features from raw telemetry data to derive meaningful attributes; and normalizing numerical inputs using mean and standard deviation re-scaling to center values around a mean and scale based on standard deviation. By transforming the raw telemetry data, the model can better interpret various operational conditions and accurately classify the machine's substate. For example, missing tank level data may be imputed using other available telemetry values and context, ensuring complete and robust input for the subsequent machine-learning model.

At 806, the transformed data is input into a machine-learning model. The machine-learning model, which may be a random forest model, is configured to use the transformed data to determine an operational substate of the machine based on historical telemetry data and pre-existing model training. The machine-learning model can be selected from amongst available ML models based on a type of the machine, where different ML models may be trained for different machine types The ability of the ML model to classify substates is built upon training data that includes ground truth labels associated with various machine activities. As described above, the training process uses historical data to identify cohesive machine activities, allowing the model to classify similar activities when presented with new input data.

At 808, a substate prediction of the machine is generated using the ML model. The prediction substate can be generated by the substate prediction tool 410 of FIG. 4. The prediction substate may include, in addition to the current operational substate, a probability value for each possible substate to reflect the confidence of the prediction. For example, if the model predicts that the substate is "Tendering," it may also indicate an 85% probability for "Tendering" and a 10% probability for "Idle," allowing operators to gauge model certainty and make informed decisions accordingly. In some cases, the substate may indicate an operational status requiring intervention, such as low fuel or an overheating engine. If such a status is detected, an alert is generated and transmitted to a remote device, prompting immediate corrective action.

At 810, the substate prediction is output to a user interface for display. The substate prediction can be output by the display and alerting tool 412 of FIG. 4. The user interface can be one or both of the user interfaces 700 and 720 of FIGS. 7A and 7B, respectively. The user interface may be configured to allow the user to manually confirm or modify the predicted substate, ensuring the system maintains accurate records even if the predicted substate does not fully align with the actual machine activity. The display can be in the form of a machine dashboard, a mobile application, or a web interface, providing farm managers and operators with real-time insights into the operational status of the machine. This feedback mechanism allows for improved data collection for future training and ensures greater accuracy of the model in predicting machine substates.

The ML model is trained prior to its deployment for real-time substate prediction. Training the model may involve receiving historical telemetry data from the machine, where the historical telemetry data can include one or more of sensor readings, machine settings, or operator inputs collected during previous operations. The technique 800 may further include assigning ground truth labels to the historical telemetry data, where the ground truth labels correspond to operational substates of the machine based on expert knowledge and contextual analysis. The training process may also involve grouping consecutive data points of the historical telemetry data that share a same ground truth label into unified segments representing cohesive machine activities, thereby creating meaningful operational events rather than isolated data points. The technique 800 may then use the grouped and labeled historical telemetry data to train the machine-learning model to classify operational substates with improved accuracy and reliability.

Assigning the ground truth labels may include several detailed steps to ensure accurate substate classification. The technique 800 may include identifying contexts for association with the historical telemetry data, where the contexts can include surrounding conditions of a location of the machine, a type of operation being conducted, and machine actions over a time frame before and after a moment of interest. This contextual analysis may provide a richer understanding of machine behavior beyond isolated sensor readings. The technique 800 may further include assigning proto labels to data points based on key features extracted from the historical telemetry data, where these preliminary classifications serve as initial markers for subsequent refinement. The labeling process may also involve refining the proto labels based on temporal context and adjacent machine activities to generate definitive substate labels that accurately reflect the machine's operational state during each time period.

Grouping of consecutive data points may follow a structured approach to create meaningful operational segments from granular telemetry data. The technique 800 may include combining consecutive data points classified into a same preliminary substate into unified events, thereby reducing fragmentation and creating coherent activity periods. The technique 800 may further include merging related groups that exhibit temporal continuity by eliminating time intervals of a predetermined duration between events of a same classification, which can help account for brief sensor noise or minor operational variations that do not represent meaningful state changes. The grouping process may also involve combining the merged groups to form larger operational events representing machine behavior patterns, enabling the technique 800 to capture extended operational sequences that provide better training data for the machine-learning model.

As used herein, unless explicitly stated otherwise, any term specified in the singular may include its plural version. For example, "a computer that stores data and runs software," may include a single computer that stores data and runs software or two computers - a first computer that stores data and a second computer that runs software. Also "a computer that stores data and runs software," may include multiple computers that together stored data and run software. At least one of the multiple computers stores data, and at least one of the multiple computers runs software.

As used herein, the term "computer-readable medium" encompasses one or more computer readable media. A computer-readable medium may include any storage unit (or multiple storage units) that store data or instructions that are readable by processing circuitry. A computer-readable medium may include, for example, at least one of a data repository, a data storage unit, a computer memory, a hard drive, a disk, or a random access memory. A computer-readable medium may include a single computer-readable medium or multiple computer-readable media. A computer-readable medium may be a transitory computer-readable medium or a non-transitory computer-readable medium.

As used herein, the term "memory subsystem" includes one or more memories, where each memory may be a computer-readable medium. A memory subsystem may encompass memory hardware units (e.g., a hard drive or a disk) that store data or instructions in software form. Alternatively or in addition, the memory subsystem may include data or instructions that are hard-wired into processing circuitry.

As used herein, processing circuitry includes one or more processors. The one or more processors may be arranged in one or more processing units, for example, a central processing unit (CPU), a graphics processing unit (GPU), or a combination of at least one of a CPU or a GPU.

As used herein, the term "engine" may include software, hardware, or a combination of software and hardware. An engine may be implemented using software stored in the memory subsystem. Alternatively, an engine may be hard-wired into processing circuitry. In some cases, an engine includes a combination of software stored in the memory subsystem and hardware that is hard-wired into the processing circuitry.

The implementations of this disclosure can be described in terms of functional block components and various processing operations. Such functional block components can be realized by a number of hardware or software components that perform the specified functions. For example, the disclosed implementations can employ various integrated circuit components (e.g., memory elements, processing elements, logic elements, look-up tables, and the like), which can carry out a variety of functions under the control of one or more microprocessors or other control devices. Similarly, where the elements of the disclosed implementations are implemented using software programming or software elements, the systems and techniques can be implemented with a programming or scripting language, such as C, C++, Java, JavaScript, assembler, or the like, with the various algorithms being implemented with a combination of data structures, objects, processes, routines, or other programming elements.

Functional aspects can be implemented in algorithms that execute on one or more processors. Furthermore, the implementations of the systems and techniques disclosed herein could employ a number of conventional techniques for electronics configuration, signal processing or control, data processing, and the like. The words "mechanism" and "component" are used broadly and are not limited to mechanical or physical implementations, but can include software routines in conjunction with processors, etc. Likewise, the terms "system" or "tool" as used herein and in the figures, but in any event based on their context, may be understood as corresponding to a functional unit implemented using software, hardware (e.g., an integrated circuit, such as an ASIC), or a combination of software and hardware. In certain contexts, such systems or mechanisms may be understood to be a processor-implemented software system or processor-implemented software mechanism that is part of or callable by an executable program, which may itself be wholly or partly composed of such linked systems or mechanisms.

Implementations or portions of implementations of the above disclosure can take the form of a computer program product accessible from, for example, a computer-usable or computer-readable medium. A computer-usable or computer-readable medium can be a device that can, for example, tangibly contain, store, communicate, or transport a program or data structure for use by or in connection with a processor. The medium can be, for example, an electronic, magnetic, optical, electromagnetic, or semiconductor device.

Other suitable mediums are also available. Such computer-usable or computer-readable media can be referred to as non-transitory memory or media, and can include volatile memory or non-volatile memory that can change over time. The quality of memory or media being non-transitory refers to such memory or media storing data for some period of time or otherwise based on device power or a device power cycle. A memory of an apparatus described herein, unless otherwise specified, does not have to be physically contained by the apparatus, but is one that can be accessed remotely by the apparatus, and does not have to be contiguous with other memory that might be physically contained by the apparatus.

## Claims

1. A method for predicting a substate of a machine, comprising:
receiving, by a server, state data transmitted from the machine, wherein the state data include telemetry data from one or more sensors on the machine, and the telemetry data are collected at a specified frequency;
processing, by the server, the state data to obtain transformed data;
inputting the transformed data into a machine-learning model, wherein the machine-learning model is configured to output an operational substate of the machine based on the transformed data;
generating, using the machine-learning model, a substate prediction of the machine, wherein the substate prediction includes a probability value for each possible substate; and
outputting the substate prediction to a user interface for display.

2. The method of claim 1, further comprising:
training the machine-learning model by receiving historical telemetry data from the machine, wherein the historical telemetry data include one or more of sensor readings, machine settings, or operator inputs;
assigning ground truth labels to the historical telemetry data, wherein the ground truth labels correspond to operational substates of the machine;
grouping consecutive data points of the historical telemetry data that share a same ground truth label into unified segments representing cohesive machine activities; and
using the grouped and labeled historical telemetry data to train the machine-learning model to classify the operational substates.

3. The method of claim 2, wherein assigning the ground truth labels comprises:
identifying contexts for association with the historical telemetry data, wherein the contexts include surrounding conditions of a location of the machine, a type of operation being conducted, and machine actions over a time frame before and after a moment of interest;
assigning proto labels to data points based on key features extracted from the historical telemetry data; and
refining the proto labels based on temporal context and adjacent machine activities to generate definitive substate labels.

4. The method of claim 2, wherein grouping the consecutive data points comprises:
combining consecutive data points classified into a same preliminary substate into unified events;
merging related groups that exhibit temporal continuity by eliminating time intervals of a predetermined duration between events of a same classification; and
combining the merged groups to form larger operational events representing machine behavior patterns.

5. The method of claim 1, wherein processing, by the server, the state data to obtain the transformed data comprises:
performing data cleaning to remove corrupted, incomplete, or outlier data points;
extracting features from raw telemetry data to derive meaningful attributes; and
normalizing numerical inputs using mean and standard deviation re-scaling to center values around a mean and scale based on standard deviation.

6. The method of claim 1, further comprising:
selecting the machine-learning model from a plurality of available machine-learning models based on a type of the machine, wherein different machine-learning models are trained for different machine types.

7. The method of claim 1, wherein the state data further includes telemetry data from an other machine that operates in tandem with the machine, and wherein the telemetry data from the other machine are also input into the machine-learning model for determining the substate of the machine.

8. The method of claim 1, wherein the telemetry data includes one or more of speed, engine temperature, tank level, location coordinates, or engine load.

9. The method of claim 1, wherein the machine-learning model is a random forest model.

10. The method of claim 1, further comprising:
determining that the substate indicates an operational status that requires intervention; and
transmitting an alert to a remote device, in response to determining that the substate indicates the operational status that requires the intervention.

11. A system, comprising:
a memory subsystem; and
processing circuitry, the processing circuitry configured to execute instructions stored in the memory subsystem to:
receive state data transmitted from a machine, wherein the state data include telemetry data from one or more sensors on the machine, and the telemetry data are collected at a specified frequency;
process the state data to obtain transformed data;
input the transformed data into a machine-learning model, wherein the machine-learning model is configured to output an operational substate of the machine based on the transformed data;
generate, using the machine-learning model, a substate prediction of the machine, wherein the substate prediction includes a probability value for each possible substate; and
output the substate prediction to a user interface for display.

12. The system of claim 11, the processing circuitry further configured to execute instructions in the memory subsystem to:
train the machine-learning model by receiving historical telemetry data from the machine, wherein the historical telemetry data include one or more of sensor readings, machine settings, or operator inputs;
assign ground truth labels to the historical telemetry data, wherein the ground truth labels correspond to operational substates of the machine;
group consecutive data points of the historical telemetry data that share a same ground truth label into unified segments representing cohesive machine activities; and
use the grouped and labeled historical telemetry data to train the machine-learning model to classify the operational substates.

13. The system of claim 12, wherein, to assign the ground truth labels, the processing circuitry configured to execute instructions stored in the memory subsystem to:
identify contexts for association with the historical telemetry data, wherein the contexts include surrounding conditions of a location of the machine, a type of operation being conducted, and machine actions over a time frame before and after a moment of interest;
assign proto labels to data points based on key features extracted from the historical telemetry data; and
refine the proto labels based on temporal context and adjacent machine activities to generate definitive substate labels.

14. The system of claim 12, wherein, to group the consecutive data points, the processing circuitry configured to execute instructions stored in the memory subsystem to:
combine consecutive data points classified into a same preliminary substate into unified events;
merge related groups that exhibit temporal continuity by eliminating time intervals of a predetermined duration between events of a same classification; and
combine the merged groups to form larger operational events representing machine behavior patterns.

15. One or more non-transitory computer-readable storage media comprising instructions that, when executed by one or more processors, perform operations for predicting a substate of a machine, the operations comprising:
receiving, by a server, state data transmitted from the machine, wherein the state data include telemetry data from one or more sensors on the machine, and the telemetry data are collected at a specified frequency;
processing, by the server, the state data to obtain transformed data;
inputting the transformed data into a machine-learning model, wherein the machine-learning model is configured to output an operational substate of the machine based on the transformed data;
generating, using the machine-learning model, a substate prediction of the machine, wherein the substate prediction includes a probability value for each possible substate; and
outputting the substate prediction to a user interface for display.

## Amended claims

### Amended claims in accordance with Rule 137(2) EPC.

1. A method for predicting a substate of an agricultural or construction machine (102A, 102B, 102C) operable in different operational states with different substates unique to their corresponding operational state, the operational states comprising an active and an idle state of the machine (102A, 102B, 102C), the method comprising:
receiving, by a server (104), state data transmitted from the machine (102A, 102B, 102C), wherein the state data indicate the operational state of the machine (102A, 102B, 102C) and include telemetry data from one or more sensors on the machine, and the telemetry data are collected at a specified frequency and include one or more of speed, engine temperature, tank level, location coordinates, or engine load;
processing, by the server (104), the state data to obtain transformed data;
inputting the transformed data into a machine-learning model, wherein the machine-learning model is configured to output an operational substate of the machine (102A, 102B, 102C) based on the transformed data and the state data further includes telemetry data from an other machine (102A, 102B, 102C) that operates in tandem with the machine (102A, 102B, 102C), and wherein the telemetry data from the other machine (102A, 102B, 102C) are also input into the machine-learning model for determining the substate of the machine (102A, 102B, 102C);
generating, using the machine-learning model, a substate prediction of the machine (102A, 102B, 102C), wherein the substate prediction includes a probability value for each possible substate; and
outputting the substate prediction to a user interface (700) for display.

2. The method of claim 1, further comprising:
training the machine-learning model by receiving historical telemetry data from the machine (102A, 102B, 102C), wherein the historical telemetry data include one or more of sensor readings, machine settings, or operator inputs;
assigning ground truth labels to the historical telemetry data, wherein the ground truth labels correspond to operational substates of the machine;
grouping consecutive data points of the historical telemetry data that share a same ground truth label into unified segments representing cohesive machine activities; and
using the grouped and labeled historical telemetry data to train the machine-learning model to classify the operational substates.

3. The method of claim 2, wherein assigning the ground truth labels comprises:
identifying contexts for association with the historical telemetry data, wherein the contexts include surrounding conditions of a location of the machine (102A, 102B, 102C), a type of operation being conducted, and machine actions over a time frame before and after a moment of interest;
assigning proto labels to data points based on key features extracted from the historical telemetry data; and
refining the proto labels based on temporal context and adjacent machine activities to generate definitive substate labels.

4. The method of claim 2, wherein grouping the consecutive data points comprises:
combining consecutive data points classified into a same preliminary substate into unified events;
merging related groups that exhibit temporal continuity by eliminating time intervals of a predetermined duration between events of a same classification; and
combining the merged groups to form larger operational events representing machine behavior patterns.

5. The method of claim 1, wherein processing, by the server (104), the state data to obtain the transformed data comprises:
performing data cleaning to remove corrupted, incomplete, or outlier data points;
extracting features from raw telemetry data to derive meaningful attributes; and
normalizing numerical inputs using mean and standard deviation re-scaling to center values around a mean and scale based on standard deviation.

6. The method of claim 1, further comprising:
selecting the machine-learning model from a plurality of available machine-learning models based on a type of the machine (102A, 102B, 102C), wherein different machine-learning models are trained for different machine types.

7. The method of claim 1, wherein the machine-learning model is a random forest model.

8. The method of claim 1, further comprising:
determining that the substate indicates an operational status that requires intervention; and
transmitting an alert to a remote device, in response to determining that the substate indicates the operational status that requires the intervention.
